(19) Europäisches Patentamt
European Patent Office
Office européen des brevets

(11) Veröffentlichungsnummer: **0 128 439 B1**

# (12) EUROPÄISCHE PATENTSCHRIFT

(45) Veröffentlichungstag der Patentschrift: **07.01.88**

(51) Int. Cl.[4]: **C 22 B 11/04**, C 01 G 5/00, C 01 G 7/00, C 01 G 55/00, C 22 B 3/00

(21) Anmeldenummer: **84106038.7**

(22) Anmeldetag: **28.05.84**

(54) **Verfahren zur Rückgewinnung von Edelmetallen der Gruppe VIII des Periodensystems der Elemente aus der bei der Carbonylierung von Methylacetat und/oder Dimethylether anfallenden verunreinigten Katalysatorlösung.**

(30) Priorität: **08.06.83 DE 3320630**

(43) Veröffentlichungstag der Anmeldung: **19.12.84 Patentblatt 84/51**

(45) Bekanntmachung des Hinweises auf die Patenterteilung: **07.01.88 Patentblatt 88/1**

(84) Benannte Vertragsstaaten: **AT BE CH DE FR GB IT LI NL**

(56) Entgegenhaltungen:
**EP-A-0 020 826**
**EP-A-0 073 342**
**EP-A-0 073 922**
**EP-A-0 100 797**
**DE-A-2 262 852**
**FR-A-2 089 421**
**FR-A-2 305 398**
**US-A-3 420 873**
**US-A-3 931 342**
**US-A-3 998 622**
**US-A-4 340 569**

(73) Patentinhaber: **HOECHST AKTIENGESELLSCHAFT, Postfach 80 03 20, D-6230 Frankfurt am Main 80 (DE)**

(72) Erfinder: **Erpenbach, Heinz, Dr., Oberbuschweg 22, D-5000 Köln 50 (DE)**
Erfinder: **Gehrmann, Klaus, Dr., Geschwister-Scholl-Strasse 32, D-5042 Erftstadt (DE)**
Erfinder: **Lork, Winfried, Siegfried-von-Westerburg-Strasse 14, D-5042 Erftstadt (DE)**
Erfinder: **Prinz, Peter, von-Geyr-Ring 104, D-5030 Hürth (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

EP 0 128 439 B1

**Beschreibung**

Die Erfindung betrifft ein Verfahren zur Rückgewinnung von Edelmetallen der Gruppe VIII des Periodensystems der Elemente aus der bei der Carbonylierung von Methylacetat und/oder Dimethylether anfallenden verunreinigten Katalysatorlösung, welche Carbonylkomplexe dieser Edelmetalle, organische Verbindungen der Stickstoffgruppe und/oder Salze der Alkalimetalle, Erdalkalimetalle, des Chroms, Eisens, Cobalts oder Nickels als Promotoren, undestillierbare organische Verunreinigungen sowie Essigsäure, Essigsäureanhydrid und Ethylidendiacetat enthält, wobei man die flüchtigen Bestandteile aus der Katalysatorlösung abdestilliert und den verbleibenden Destillationsrückstand mit Wasser behandelt, wobei der Edelmetall-Carbonyl-Komplex zusammen mit den oganischen Verunreinigungen ausgefällt und von der wässrigen Phase abgetrennt wird, während der Promotor in Lösung geht und in bekannter Weise zurückgewonnen wird.

Zur Durchführung von Hydroformylierungs- und Carbonylierungsverfahren wird als Edelmetallkatalysator Rhodium in Form vielfältiger komplexer Verbindungen eingesetzt, weshalb in der Literatur über die Rückgewinnung von Rhodium bzw. Reinigung von Rhodiumkomplexen aus mit Rückständen verunreinigten Katalysatorsystemen bzw. Destillationssümpfen dieser angeführten Reaktionen berichtet wird.

Die EP-A-O 100 797 beschreibt die Rückgewinnung von Metallen, vorzugsweise aus der Reihe der Übergangsmetalle der 1. und 8. Gruppe des Periodensystems der Elemente, aus ihren Verbindungen mit Hilfe einer Substanz, die entstanden ist durch Reaktion eines Alkalimetalls oder Alkalihydroxids mit einem Polyglykol oder Polyglykolmonoalkylether der Formel

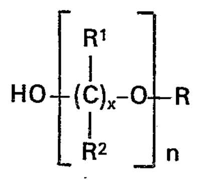

worin R, $R^1$ und $R^2$ u.a. H oder niederes Alkyl bedeuten, während n = 2-400 und x = mindestens 2, in Gegenwart von Sauerstoff. Bevorzugt ist eine Substanz der Formel $HO-[CH_2-CH_2O]_n H$ mit einem durchschnittlichen Molekulargewicht von 100 bis 20 000. Auf Seite 5, Zeilen 1-3, der EP-A-O 100 797 ist ausgesagt, dass flüssige Glykole, in denen beide endständige Hydroxy-Gruppen verethert sind, die gewünschte Reaktivität nicht entfalten.

Das in der DE-OS 2 262 852 beschriebene Verfahren zur Abscheidung von Rhodium aus Rh-Carbonylkomplexe enthaltenden Lösungen und Überführen des abgeschiedenen Rhodiums in lösliche Rh-Carbonylkomplexe genügt nicht den Voraussetzungen, die an ein wirtschaftlich arbeitendes Verfahren gestellt werden. Bei diesem Verfahren werden die Rh-Carbonylkomplexe enthaltenden Reaktionslösungen mit Wasserstoff in Gegenwart von Trägerstoffen bei Temperaturen von 25° bis 300°C und unter Drücken von 1 bis 700 bar behandelt, wobei sich das Rhodium auf dem Trägerstoff absetzt. Nach Abtrennen der Reaktionslösung wird das niedergeschlagene Rhodium durch Behandeln mit Kohlenmonoxid in Gegenwart von Lösemitteln und Verbindungen, die Kohlenmonoxid als Liganden ersetzen können, unter erhöhter Temperatur und erhöhtem Druck wieder in lösliche Rhodium-Carbonylkomplexe überführt. Hierbei wird das Rhodium im Durchschnitt nur zu 96%, höchstens zu 99,9%, auf dem Träger niedergeschlagen. Das Ablösen des Rhodiums vom Träger zu einem löslichen Rh-Carbonylkomplex wird trotz des hohen Druckes von ca. 700 bar nur zu höchstens 84,4% erreicht. Damit beträgt die Gesamtausbeute an zurückgewonnenem Rhodium bestenfalls 84,3%, was bei den hohen Rhodiumpreisen wirtschaftlich nicht zu vertreten ist. Ein weiterer grosser Nachteil dieses Verfahrens besteht darin, dass der Trägerstoff mit 0,8 bis 5% Palladium dotiert ist. Da Palladium auch Carbonylkomplexe bildet, wird beim Ablösen des Rhodiums auch Palladium vom Trägerstoff entfernt.

Die DE-OS 3 208 060 und DE-OS 3 208 061 beschreiben Verfahren zur Rückgewinnung von Edelmetallen der Gruppe VIII des Periodensystems der Elemente aus den bei edelmetallkatalysierten Carbonylierungsreaktionen anfallenden Rückständen. Nach Abtrennen der flüchtigen Bestandteile unter vermindertem Druck wird das Rhodium durch Behandeln des verbleibenden Rückstandes mit Aminen, vorzugsweise primären aliphatischen Aminen oder Hydrazin, freigesetzt und anschliessend durch Extraktion mit wässrigen Halogensäuren und ggf. Ethylendiamintetraessigsäure gewonnen.

Die Wirkung der Behandlung mit einem Amin soll durch Vorbehandlung der unter vermindertem Druck erhaltenen Rückstände mit einem Alkanol, insbesondere Methanol, und anschliessender Einengung unter Vakuum noch besser sein. Die Ausbeute an gewinnbarem Rhodium wird mit wenigstens 99% angegeben. Beide Verfahren weisen jedoch den Nachteil auf, dass es im Verlauf einer längeren Betriebsperiode zu Anreicherungen von hochpolymeren Verbindungen kommen kann. Darüber hinaus umfassen beide Verfahren mehrere Stufen und erscheinen deshalb weniger wirtschaftlich.

Einen anderen Weg der Reinigung und Rückgewinnung der bei der Carbonylierung von Methylacetat und/oder Dimethylether anfallenden verunreinigten Katalysatorlösungen beschreiten die Verfahren der DE-OS 3 134 347 und 3 134 350. In beiden Fällen werden zunächst die flüchtigen Bestandteile aus der verunreinigten Katalysatorlösung entfernt. Gemäss DE-OS 3 134 347 erfolgt die Entfernung der organischen Verunreinigungen aus dem verbleibenden Rückstand durch Extraktion mit aliphatischen Ethern. Gemäss DE-OS 3 134 350 wird der Rückstand nach Abtrennen der flüchtigen Bestandteile zunächst mit Hilfe von

Wasser in den wasserlöslichen organischen Promoter und in ein wasserunlösliches Gemisch aus Rhodiumcarbonylkomplex und organischen Verunreinigungen aufgetrennt. Aus dem wasserunlöslichen Rückstand werden sodann unter Verwendung aliphatischer Ether die organischen Verunreinigungen herausgelöst. In beiden Fällen bleibt der Edelmetall-Carbonyl-Komplex erhalten und gelangt wieder in den Reaktionskreislauf, während die gebildeten Rückstände jeweils aus der Etherphase isoliert werden. Die Rhodium- bzw. Edelmetallausbeute erreicht Werte zwischen 98,8 und 99,6%.

Beide Verfahren lassen die Möglichkeit zu, dass sich nach mehrfacher Rückführung des gereinigten Katalysators in den Carbonylierungsprozess Verbindungen anreichern können, die aus der zur Reinigung aufbereiteten Katalysatorlösung mit aliphatischen Ethern nicht mehr extrahierbar sind.

Die vorliegende Erfindung umgeht die bisher aufgezeigten Nachteile und beschreibt ein Verfahren, das es mit Hilfe thermisch-extraktiver Methoden ermöglicht, den bei der Carbonylierung von Methylacetat und/oder Dimethylether eingesetzten und im Laufe des Prozesses verunreinigten Katalysatorkomplex so aufzuarbeiten, dass unter Extraktion der undestillierbaren organischen Verunreinigungen mit Ethylenglykoldialkylethern der Form $R(OC_2H_4)_n$-OR (n = 1-4) das Edelmetall der Gruppe VIII in elementarer Form ausfällt und mit Ausbeuten von > 99,8%, bezogen auf eingesetztes Edelmetall, zurückgewonnen wird. Überraschenderweise fällt bei dieser Reinigungsmethode aus der Ethylenglykoldialkyletherphase das Edelmetall in elementarer Form aus und bleibt in dem organischen Lösemittel ungelöst, während selbst hochpolymere organische Verunreinigungen extrahiert werden und in Lösung gehen.

Im einzelnen ist das Verfahren der Erfindung nunmehr dadurch gekennzeichnet, dass man aus dem abgetrennten, mit organischen Polymeren verunreinigten Edelmetall-Carbonyl-Komplex durch Behandeln mit Ethylenglykoldialkylethern der Formel $R(-OCH_2-CH_2)$ -OR, wobei n = 1-4 und R gleiche oder verschiedene Alkylreste mit 1-6 C-Atomen bedeutet, bei Temperaturen von 150° bis 300°C die Edelmetalle in elementarer Form freisetzt und durch Filtration gewinnt, während die organischen Verunreinigungen im Lösemittel verbleiben und nach Abdestillieren und Rückgewinnung des Lösemittels entfernt werden.

Das Verfahren der Erfindung kann weiterhin bevorzugt und wahlweise dadurch gekennzeichnet sein, dass man

a) die Behandlung des abgetrennten verunreinigten Edelmetall-Carbonyl-Komplexes mit Ethylenglykoldialkylether bei Temperaturen von 210-250°C vornimmt.;

b) je Gewichtsteil verunreinigten Edelmetall-Carbonyl-Komplexes 5 bis 30 Gewichtsteile Ethylenglykoldialkylether einsetzt;

c) die Wärmebehandlung des verunreinigten Edelmetall-Carbonyl-Komplexes mit Ethylenglykoldialkylether unter Zusatz von Wasserstoff oder Synthesegas ($H_2$ + CO) vornimmt;

d) die Wärmebehandlung des verunreinigten Edelmetall-Carbonyl-Komplexes unter einem Druck von 1 bis 50 bar durchführt.

Als Ethylenglykoldimethylether werden bevorzugt Triethylenglykoldimethylether, Diethylenglykoldimethylether und Diethylenglykol-n-butyl-t-butylether eingesetzt. Es können aber auch Gemische verschiedener Ethylenglykoldialkylether verwendet werden.

Zur Herkunft der verunreinigten Katalysatorlösung ist zu sagen, dass die aus einem Carbonylierungsreaktor abfliessende Reaktionsmischung destillativ in die gewünschten Endprodukte, besonders Essigsäureanhydrid, Essigsäure und/oder Ethylidendiacetat, und nichtumgesetzte, im Kreislauf geführte Ausgangsstoffe einerseits sowie die als Sumpfprodukt anfallende Katalysatorlösung andererseits aufgetrennt wird. Ein Teilstrom dieser mit der Zeit verunreinigten Katalysatorlösung wird aus dem Kreislauf der Katalysatorlösung entnommen und destillativ, vorzugsweise bei 70-130°C und 0,2-100 mbar, von den flüchtigen Bestandteilen wie Essigsäure, Essigsäureanhydrid und Ethylidendiacetat befreit.

Die verunreinigten Katalysatorlösungen enthalten als Edelmetalle im allgemeinen Rhodium, Iridium, Palladium und/oder Ruthenium, die als Carbonylkomplexe wie z.B. $[CH_3P(C_4H_9)_3]_2Rh(CO)I_5$ oder $CH_3P(C_4H_9)_3Rh(CO)_2I_2$ vorliegen.

Die Katalysatorlösungen enthalten ferner als organische Promotoren bevorzugt einen oder mehrere der folgenden heterocylischen aromatischen Stickstoffverbindungen oder Organophosphorverbindungen:

1. N-Methylpyridiniumjodid, N,N-Dimethylimidazoliumjodid, N-Methyl-3-picoliniumjodid, N-Methyl-2,4-lutidiniumjodid, N-Methyl-3,4-lutidiniumjodid, N-Methyl-chinoliniumjodid.
2. Tri-n-butyl-methyl-phosphoniumjodid, Trioctyl-methyl-phosphoniumjodid, Trilaurylmethyl-phosphoniumjodid, Triphenyl-methyl-phosphoniumjodid.

Als anorganische Promotoren können insbesondere die Acetate und Jodide, aber auch die Bromide, Chloride, Nitrate oder Sulfate der Alkalimetalle oder Erdalkalimetalle, sowie von Chrom, Eisen, Cobalt oder Nickel dienen.

Der verbleibende Destillationsrückstand wird sodann zweckmässig unter Rühren in Wasser eingetragen und vorzugsweise auf 40-80°C erwärmt. Je Gewichtsteil Destillationsrückstand setzt man bevorzugt 10 bis 100 Gewichtsteile Wasser ein. Der Anteil des Destillationsrückstandes an Promotor löst sich dabei in der Wasserphase auf, während der Edelmetall-Carbonyl-Komplex mit den bei der Reaktion gebildeten undestillierbaren organischen Verunreinigungen ungelöst bleibt. Der in der Wasserphase unlösliche Rückstand wird abfiltriert und einer Wärmebehandlung, ggf, unter Zusatz von Wasserstoff oder Synthesegas, in einem Ethylenglykoldialkylether der Formal $R(OC_2H_4)_n-OR$ (n = 1–4) bei z.B. 230°C unterzogen. Neben der Auflösung der organischen Verunreinigungen aus dem wasserunlöslichen Rückstand wird dabei auch der Edelmetall-Carbonyl-Komplex zersetzt, so dass es zu einem Ausfall von elementarem Edelmetall kommt. Das Edelmetall wird abfiltriert und kann nach geeigneter Behandlung dem Carbonylierungsprozess wieder zugeführt werden.

Die im Ethylenglykoldialkylether gelösten undestillierbaren organischen Verunreinigungen werden nach Abdestillieren des Ethylenglykoldialkylethers z.B. in einer Verbrennungsanlage vernichtet. Der Ethylenglykoldialkylether kann erneut zur Edelmetallrückgewinnung verwendet werden.

Das Verfahren der Erfindung kann sowohl in kontinuierlicher als auch diskontinuierlicher Betriebsweise durchgeführt werden.

Beispiel 1

Dem aus Essigsäureanhydrid, Essigsäure, Ethylidendiacetat, Rhodium-Carbonylkomplex ($LRh(CO)_2J_2$; L = $CH_3P(CH_2CH_2\ CH_2CH_3)_3$, Tri-n-butylmethylphosphoniumjodid als organischem Promotor und undestillierbaren organischen Verunreinigungen bestehenden Katalysatorkreislauf der Dimethylethercarbonylierung werden 200 g Katalysatorlösung entnommen. Diese Lösung wird unter einem Druck von höchstens 0,4 mbar und bei einer Blasentemperatur bis zu 120°C in 33,6 g (16,8 Masse-%) Destillat (Zusammensetzung: 46,1 Masse-% Essigsäure, 52,4 Masse-% Essigsäureanhydrid, 1,5 Masse-% Ethylidendiacetat) und 166,4 g Destillationsrückstand mit 1,95 g Rhodium und 137,9 g Tri-n-butylmethylphosphoniumjodid (= 5,97 Masse-% Rh-Carbonylkomplex und 68,95 Masse-% TBMPJ, berechnet auf 200 g Katalysatorlösung) aufgetrennt. Der Destillationsrückstand wird zermörsert und unter starkem Rühren in 4 Liter Wasser von 20–25°C eingetragen. Nach 30 Minuten wird die Suspension unter weiterem Rühren auf 70°C erwärmt. Nach einer Gesamtzeit von 1,5 Stunden wird der verbleibende Rückstand über eine Nutsche filtiert, mit Wasser nachgewaschen und anschliessend bei 120°C und höchstens 1 mbar Druck getrocknet. Die Auswaage ergibt 28,5 g, ihre Analyse 1,95 g Rhodium. Aus der Wasserphase wird in bekannter Weise durch Abdampfen des Wassers bei Blasentemperaturen bis zu 120°C und höchstens 1 mbar Druck Tri-n-butylmethylphosphoniumjodid in einer Menge von 137,5 g (99,7%, berechnet auf den Einsatz) zurückgewonnen.

Der wasserunlösliche Rückstand wird zur weiteren Aufarbeitung in 3 gleiche Portionen aufgeteilt.

9,5 g des wasserunlöslichen Rückstandes werden mit 190 g Triethylenglykoldimethylether versetzt und unter Rühren 5 Stunden auf 220°C erwärmt. Anschliessend wird auf Raumtemperatur abgekühlt und filtriert. Dabei werden nach dem Trocknen im Filter 0,656 g eines Rückstandes mit 98,9 Masse-% Rhodium erhalten, woraus sich eine Rh-Ausbeute von 99,8%, bezogen auf eingesetztes Rhodium errechnet. Die gewonnene Filtratmenge von 198 g wird an einem Rotationsverdampfer in 189 g Destillat und 8,5 g Rückstand aufgetrennt. Das Destillat besteht aus wiederverwendbarem Triethylenglykoldimethylether, während im zu verwerfenden Destillationsrückstand die organischen Polymeren mit einem Anteil von 0,2 Masse-% Rhodium, bezogen auf Rh-Einsatz, verbleiben.

Der aus Rhodium bestehende Filtrationsrückstand kann dem Carbonylierungsprozess nach geeigneter Behandlung wieder zugeführt werden.

Beispiel 2

9,5 g des gemäss Beispiel 1 gewonnenen wasserunlöslichen Rückstandes werden mit 150 g Triethylenglykoldimethylether versetzt und unter Rühren und Einblasen von 3 l/h Synthesegas (50 Vol% Wasserstoff, 50 Vol% Kohlenmonoxid) 3 Stunden auf etwa 220°C erwärmt. Danach wird der Ansatz auf 20°C abgekühlt und filtriert. Es werden 0,656 g Filterkuchen mit 99 Masse-% Rhodium (= über 99,9% Rh-Ausbeute bezogen auf den Rh-Einsatz) und 158 g Filtrat erhalten. Das Filtrat wird mit Hilfe eines Rotationsverdampfers unter einem Druck von höchstens 1 mbar und einer Badtemperatur von etwa 120°C in 149 g Triethylenglykoldimethylether und 8,5 g Rückstand zerlegt. Das als Filterkuchen gewonnene Rhodium wird dem Carbonylierungsprozess wieder zugeführt, während der Rückstand mit den undestillierbaren organischen Verbindungen aus dem Prozess entfernt wird.

Beispiel 3

9,5 g des gemäss Beispiel 1 gewonnenen wasserunlöslichen Rückstandes werden mit 210 g Diethylenglykoldimethylether in einen Autoklaven aus korrosionsbeständigem Edelstahl eingewogen und mit einem Wasserstoffdruck von 10 bar überlagert. Anschliessend wird 5 Stunden auf 230 bis 240°C erwärmt, wobei sich im Autoklaven ein Druck von 20 bis 25 bar einstellt.

Nach dem Abkühlen wird entspannt und das aus dem Autoklaven entnommene Produkt filtriert. Nach dem Trocknen verbleibt im Filter ein Rückstand von 0,657 g. Die Analyse ergibt einen Rh-Gehalt von 98,9%, woraus sich die Ausbeute an zurückgewonnenem Rhodium zu über 99,9% errechnet. Die Destillation des Filtrats (218 g) liefert 8,5 g Rückstand und 209,5 g Diethylenglykoldimethylether.

Beispiel 4

Dem aus Rhodium-Carbonylkomplex ($L_2Rh(CO)J_5$;

L = 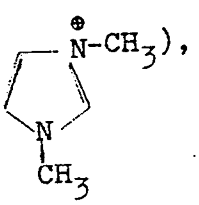

N,N-Dimethylimidazoliumjodid als organischem Promotor, undestillierbaren organischen Verunreinigungen, Essigsäure, Essigsäureanhydrid und Ethylidendiacetat bestehenden Katalysatorkreislauf der Methylacetat-Carbonylierung werden 200 g Katalysatorlösung entnommen. Diese Lösung wird unter einem Druck von höchstens 2 mbar und bei einer Blasentemperatur bis zu 120°C in 42 g (21,0 Masse-%) Destillat (48,3 Masse-% Essigsäure, 51,2 Masse-% Essigsäureanhydrid, 0,5 Masse-% Ethylidendiacetat) und 158,0 g Destillationsrückstand mit 1,8 g Rhodium (= 8,13 Masse-% Rh-Carbonylkomplex und 65,6 Masse-% DMIJ, berechnet auf 200 g Katalysatorlösung) zerlegt. Der Destillationsrückstand wird unter kräftigem Rühren in 4,5 l Wasser eingetragen; anschliessend wird diese Suspension auf etwa 70°C erwärmt und 1 Stunde auf dieser Temperatur gehalten. Der verbleibende Rückstand wird filtriert, mit Wasser nachgewaschen und bei 120°C/2 mbar getrocknet. Die Auswaage ergibt eine Rückstandsmenge von 32,8 g mit einem Rh-Gehalt von 5,49% (= 1,8 g). Zur Freisetzung des Rhodiums wird der gesamte Rückstand mit 550 g Triethylenglykoldimethylether versetzt und unter Einleiten von 4 l/h Wasserstoff 3 Stunden auf einer Temperatur von 220°C gehalten. Nach Abkühlen und anschliessender Filtration werden 1,82 g Filterrückstand mit einem Rh-Gehalt von 98,7 Masse-% gewonnen. Die Ausbeute an zurückgewonnenem Rhodium beträgt 99,8%. Die Destillation des Filtrats (580 g) liefert 30,5 g Rückstand und 549 g Triethylenglykoldimethylether.

Beispiel 5

Dem aus Rhodium-Carbonylkomplex ($LiRh(CO)_2J_2$), Lithiumjodid und Lithiumacetat als anorganischen Promotoren und undestillierbaren organischen Verunreinigungen bestehenden Katalysatorkreislauf der Methylacetatcarbonylierung werden 200 g Katalysatorlösung entnommen und unter vermindertem Druck von höchstens 2 mbar sowie einer Blasentemperatur von bis zu 120°C von den destillierbaren Anteilen befreit. Dabei werden 144,4 g (72,2 Masse-%) Destillat (39,3 Masse-% Essigsäure, 58,6 Masse-% Essigsäureanhydrid, 2,1 Masse-% Ethylidendiacetat) und 55,6 g (27,8 Masse-%) Destillationsrückstand mit 1,72 g Rhodium erhalten. Der Destillationsrückstand wird unter Rühren in 1500 g Wasser eingegeben und danach 1 Stunde auf 60–70°C erwärmt. Der verbleibende Rückstand wird nach Filtration bei 120°C/2 mbar getrocknet und mit 21,0 g ausgewogen (Rh-Gehalt 8,2 Masse-%). Zur Freisetzung des Rhodiums wird der gesamte Rückstand mit 350 g Diethylenglykol-n-butyl-t-butyl-ether unter Einleiten von 5 l/h Synthesegas 4 Stunden bei 230°C behandelt. Nach dem Abkühlen wird filtriert, wobei 1,738 g Filterrückstand mit einem Rh-Gehalt von 98,8 Masse-% erhalten werden. Die Ausbeute an wiedergewonnenem Rhodium beträgt 99,8%. Das Filtrat (368 g) liefert bei der Destillation 18 g Rückstand und 349,5 g wieder verwendbaren Diethylenglykol-n-butyl-t-butyl-ether.

## Patentansprüche

1. Verfahren zur Rückgewinnung von Edelmetallen der Gruppe VIII des Periodensystems der Elemente aus der bei der Carbonylierung von Methylacetat und/oder Dimethylether anfallenden verunreinigten Katalysatorlösung, welche Carbonylkomplexe dieser Edelmetalle, organische Verbindungen der Stickstoffgruppe und/oder Salze der Alkalimetalle, Erdalkalimetalle, des Chroms, Eisens, Cobalts oder Nickels als Promotoren, undestillierbare organische Verunreinigungen sowie Essigsäure, Essigsäureanhydrid und Ethylidendiacetat enthält, wobei man die flüchtigen Bestandteile aus der Katalysatorlösung abdestilliert und den verbleibenden Destillationsrückstand mit Wasser behandelt, wobei der Edelmetall-Carbonyl-Komplex zusammen mit den organischen Verunreinigungen ausgefällt und von der wässrigen Phase abgetrennt wird, während der Promotor in Lösung geht und in bekannter Weise zurückgewonnen wird, dadurch gekennzeichnet, dass man aus dem abgetrennten, mit organischen Polymeren verunreinigten Edelmetall-Carbonyl-Komplex durch Behandeln mit Ethylenglykoldialkylethern der Formel $R(-OCH_2-CH_2)_n-OR$, wobei $n = 1-4$ und R gleiche oder verschiedene Alkylreste mit 1–6 C-Atomen bedeutet, bei Temperaturen von 150°C bis 300°C die Edelmetalle in elementarer Form freisetzt und durch Filtration gewinnt, während die organischen Verunreinigungen im Lösemittel verbleiben und nach Abdestillieren und Rückgewinnung des Lösemittels entfernt werden.

2. Verfahren nach Anspruch 1, dadurch gekennzeichnet, dass man die Behandlung des abgetrennten verunreinigten Edelmetall-Carbonyl-Komplexes mit Ethylenglykoldialkylether bei Temperaturen von 210° bis 250°C vornimmt.

3. Verfahren nach einem der vorhergehenden Ansprüche, dadurch gekennzeichnet, dass man je Gewichtsteil verunreinigten Edelmetall-Carbonyl-Komplexes 5 bis 30 Gewichtsteile Ethylenglykoldialkylether einsetzt.

4. Verfahren nach einem der vorhergehenden Ansprüche, dadurch gekennzeichnet, dass man die Wärmebehandlung des verunreinigten Edelmetall-Carbonyl-Komplexes mit Ethylenglykoldialkylether unter Zusatz von Wasserstoff oder Synthesegas ($H_2 + CO$) vornimmt.

5. Verfahren nach einem der vorhergehenden Ansprüche, dadurch gekennzeichnet, dass man die Wärmebehandlung des verunreinigten Edelmetall-Carbonyl-Komplexes unter einem Druck von 1 bis 50 bar durchführt.

## Claims

1. Process for recovering noble metals belonging to group VIII of the Periodic System of the elements from a contaminated catalyst solution originating from the carbonylation of methyl acetate, and/or dimethylether, the catalyst solution containing carbonyl complexes of these noble metals, organic compounds of the nitrogen group and/or salts of the alkali metals, alkaline earth metals, chromium, iron, cobalt or nickel as promoters, and undistillable organic contaminants as well as acetic acid, acetic anhydride and ethylidene diacetate, wherein the volatile constituents are distillatively removed from the catalyst solution and the remaining distillation residue is water-treated whereby the noble metal/carbonyl-complex is precipitated together with the organic contaminants and is separated from the aqueous phase, whilst the promoter is dissolved and recovered in known manner, which comprises: setting free the noble metals in elemental form by subjecting the noble metal/carbonyl-complex separated and contaminated with organic polymers at temperatures of 150°C to 300°C to treatment with an ethyleneglycoldialkylether of the formula $R(-OCH_2-CH_2)_n-OR$, in which n stands for a number of 1 to 4 and R stands for identical or different alkyl groups having from 1 to 6 carbon atoms, and recovering the noble metals so set free by filtration and, after distillative removal and recovery of the solvent, removing the organic contaminants retained in the solvent.

2. Process as claimed in claim 1, wherein the separated and contaminated noble metal/carbonyl-complex is treated with the ethyleneglycoldialkylether at temperatures of 210° to 250°C.

3. Process as claimed in claim 1 or 2, wherein 5 to 30 parts by weight ethyleneglycoldialkylether are used per part by weight contaminated noble metal/carbonyl-complex.

4. Process as claimed in any of the preceding claims, wherein the contaminated noble metal/carbonyl-complex is heat-treated with the ethyleneglycoldialkylether with addition of hydrogen or synthesis gas ($H_2 + CO$).

5. Process as claimed in any of the preceding claims, wherein the contaminated noble metal/carbonyl-complex is heat-treated under a pressure of 1 to 50 bars.

## Revendications

1. Procédé de récupération de métaux nobles appartenant au groupe VIII de la Classification Périodique des Eléments à partir de la solution catalytique contaminée obtenue lors de la carbonylation de l'acétate de méthyle et/ou de l'éther diméthylique, contenant des complexes carbonyles de ces metaux nobles, des composés organiques du groupe de l'azote et/ou des sels des métaux alcalins, des métaux alicalino-terreux, du chrome, du fer, du cobalt ou du nickel comme promoteurs et des impuretés organiques non distillables ainsi que de l'acide acétique, de l'anhydride acétique et du diacétate d'éthylidène, les constituants volatils étant éliminés de la solution catalytique par distillation et le résidu de distillation retenu étant traité par l'eau avec précipitation du complexe métal noble-carbonyle conjointement avec les impuretés organiques et ensuite sépare de la phase aqueuse, tandis que le promoteur est dissous et ensuite récupéré de manière habituelle, caractérisé en ce que l'on traite le complexe metal noble-carbonyle contaminé par des polymères organiques et séparé par des éthers dialkyliques d'éthylèneglycol répondant à la formule $R(-OCH_2-CH_2)_n-OR$, dans laquelle n représente un nombre de 1-4 et R représente des groupes alkyles en $C_1-C_6$ identiques ou différents, pour en libérer, à des températures de 150-300°C, les métaux nobles sous forme élémentaire et les récupérer par filtration, tandis que les impuretés organiques restent dans le solvant et sont éliminées après distillation et recupération du solvant.

2. Procédé selon la revendication 1, caractérisé en ce que l'on soumet le complexe métal noble-carbonyle contaminé et séparé au traitement par les éthers dialkyliques d'éthylèneglycol à des températures de 210-250°C.

3. Procédé selon l'une des revendications précédentes, caractérisé en ce que l'on utilise 5-30 parties en poids d'éther dialkylique d'éthylèneglycol par partie en poids de complex métal noble-carbonyle contaminé.

4. Procédé selon l'une des revendications précédentes, caractérisé en ce que l'on soumet le complexe métal noble-carbonyle contaminé au traitement à chaud par l'éther dialkylique d'éthylèneglycol avec addition d'hydrogène ou de gaz de synthèse ($H_2 + CO$).

5. Procédé selon l'une des revendications précédentes, caractérisé en ce que l'on soumet le complexe métal noble-carbonyle au traitement à chaud sous une pression de 1-50 bars.